# EUROPEAN PATENT APPLICATION

(11) **EP 4 733 825 A1**
(43) Date of publication of application: **29.04.2026**
(21) Application number: 24209109.8
(22) Date of filing: 28.10.2024
(51) Int. Cl.: G02B 26/08

(54) **MEMS MIRROR WITH REDUCED DEFORMATION**

(71) Applicant: Murata Manufacturing Co., Ltd., Nagaokakyo-shi, Kyoto 617-8555 (JP)
(72) Inventor: LIUKKU, Matti, 00320 Helsinki (FI)
(74) Representative: Boco IP Oy Ab

(57) **Abstract**

A MEMS mirror device comprising a reflector, a support structure and a first suspension structure, the first suspension structure allows the reflector to rotate about a rotation axis. Stiffening springs extend from the support structure to the reflector. Each stiffening spring comprises one or more folds in the support plane.

## Description

### FIELD OF THE DISCLOSURE

This disclosure relates to microelectromechanical (MEMS) devices, and more particularly to MEMS mirrors. The present disclosure further concerns the mechanical deformation of the light-reflector in such devices.

### BACKGROUND OF THE DISCLOSURE

MEMS mirrors can be used for example in scanning applications where they reflect a light beam toward the surrounding environment. A light-detecting device may detect the beam after it has been reflected back from the environment. The light-reflecting part of the MEMS mirror, which may be called the reflector, can be configured to oscillate about one or two rotation axes. The reflected light beam can thereby be rapidly scanned across an area of interest, and the surrounding environment can be mapped.

The reflector should ideally move as a rigid body when it oscillates. However, reflectors will usually not remain perfectly flat when they oscillate in the frequency range which is required in many scanning applications. Instead, the edges of the reflector may curve back and forth as it oscillates. This bending may be called dynamic deformation.

The dynamic deformation will typically be maximal at the point on the edge of the reflector which is furthest away from a rotation axis. The maximal deformation is proportional to D⁵f² Θ / t², where D is the diameter of the reflector in relation to the rotation axis, t is the thickness of the reflector, f is the oscillation frequency and Θ is the oscillation amplitude. Dynamic deformation is therefore a particularly difficult challenge in relatively large mirrors which should oscillate at high frequencies.

Documents US20070047046 and US20230118492 disclose scanning micromirrors where the edges of a reflector are connected to a rim which reduces dynamic deformation. The rim rotates about the same axis as the reflector. A problem with this arrangement is that, even though the rim reduces deformation, it also limits the oscillation frequency since it must follow the movement of the reflector.

### BRIEF DESCRIPTION OF THE DISCLOSURE

An object of the present disclosure is to provide an apparatus which overcomes the above problem.

The object of the disclosure is achieved by an arrangement which is characterized by what is stated in the independent claim. The preferred embodiments of the disclosure are disclosed in the dependent claims.

The disclosure presents an arrangement where deformation is reduced with folded springs. The flexibility of this spring geometry allows deformation to be reduced without significantly inhibiting the rotation of the reflector.

### BRIEF DESCRIPTION OF THE DRAWINGS

In the following the disclosure will be described in greater detail by means of preferred embodiments with reference to the accompanying drawings, in which:
Figure 1a illustrates a MEMS mirror device.
Figure 1b illustrates a single-axis embodiment.
Figures 1c - 1d illustrate a two-axis embodiment.
Figures 2a - 2b illustrate a stiffening spring with a fold.
Figures 3a - 3f illustrate stiffening springs with different shapes.
Figures 4a - 4b illustrate the geometry of stiffening springs.
Figures 5a - 5d illustrate the span of stiffening springs.
Figure 6 illustrates the location of attachment points on the edge of the reflector.
Figure 7a illustrates the single-axis embodiment.
Figure 7b illustrates the two-axis embodiment.
Figures 8a - 8b illustrate piezoelectric actuation.
Figure 8c illustrates capacitive actuation.

### DETAILED DESCRIPTION OF THE DISCLOSURE

This disclosure describes a MEMS mirror device comprising a reflector a support structure and a first suspension structure. The support structure defines a support plane. The first suspension structure extends from the support structure to the reflector and allows the reflector to rotate about a first rotation axis out of the support plane.

The device also comprises one or more first stiffening springs which extend from the support structure to the reflector on a first side of the first rotation axis, and one or more second stiffening springs which extend from the support structure to the reflector on a second side of the first rotation axis. The second side of the first rotation axis is opposite to the first.

Each of the one or more first and second stiffening springs comprises one or more folds in the support plane.

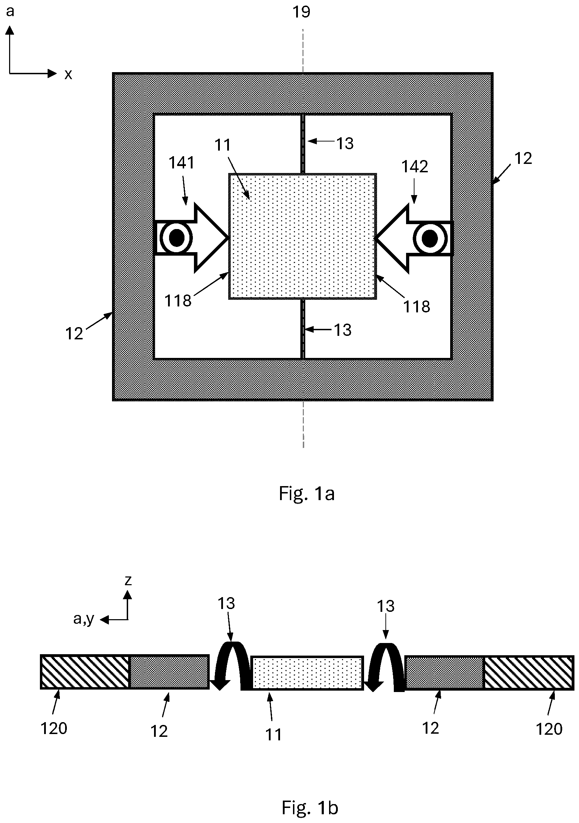

Figure 1a illustrates a MEMS mirror device comprising a reflector 11, a support structure 12 and a first suspension structure 13. The support structure 12 may surround the reflector 11. The support structure 12 defines a support plane, which is illustrated as the xa-plane. A b-axis may be orthogonal to the xa-plane. The first suspension structure 13 may for example comprise two torsionally flexible springs aligned on the first rotation axis 19 on opposite sides of the reflector 11. The first suspension structure allows the reflector 11 to move out of the support plane by rotating about the first rotation axis 19.

The reflector 11, the support structure 12, the first suspension structure 13 and all other structures described and illustrated in this disclosure may be formed in a device layer. The device layer may be made of silicon. All structural parts of the MEMS mirror device which are described in this disclosure, except the optional piezoelectric force transducers, may be made of the silicon in the device layer. They can be made by etching this layer.

The device layer may for example be formed in a silicon wafer, which may be called the device wafer. Alternatively, the device layer may be a silicon layer which has been deposited on a substrate. In either case, the structures described in this disclosure may be formed in the device layer by etching. The device layer may for example be 50 - 100 micrometers thick. The device layer may be structurally supported by a thicker support wafer. However, the support wafer will not be illustrated or discussed any further in this disclosure.

The device layer may define a device plane, which is illustrated as the xy-plane. The difference between the xy-plane and the xa-plane may be explained with reference to figures 1b - 1d. Figures 1b - 1d depict fixed structures 120 of the device layer. The fixed parts may be immobile in relation to the handle wafer and to all other parts of the device which are locked in place. These fixed structures 120 of the device layer may surround the parts illustrated in figure 1a on all sides.

In some embodiments described in this disclosure, the support structure 12 may be a fixed part of the device layer. This is illustrated in figure 1b, where the fixed structures 120 extend all the way to the support structure 12 and lock the supporting structure 12 in place. The reflector 11 is a mobile part of the device layer which may rotate out of the xa-plane, about the first rotation axis 19 (not illustrated in figure 1b). The first rotation axis 19 is in this case parallel to both the y- and the a-axis. The movement of the reflector 11 is the only movement which occurs in the device shown figure 1b. Since the support structure 12 always lies in the device plane, the a-axis coincides with the y-axis and the xa-plane is the same plane as the xy-plane. The reflector scans a one-dimensional field-of-view. This arrangement may be called a single-axis embodiment.

However, in some embodiments presented in this disclosure, which may be called two-axis embodiments, the support structure 12 may undergo movement in relation to the fixed structure 120 in the device layer. The reflector 11 still rotates about the first rotation axis 19, just as before. The movement of the support structure 12 allows the reflector two scan a two-dimensional field-of-view. The support structure 12 may be suspended from the fixed parts by a second suspension structure (not illustrated) which allows the support structure 12 to rotate about a second rotation axis 49. The second rotation axis 49 lies in the xy-plane and may be perpendicular to both the y-axis and to the first rotation axis 19.

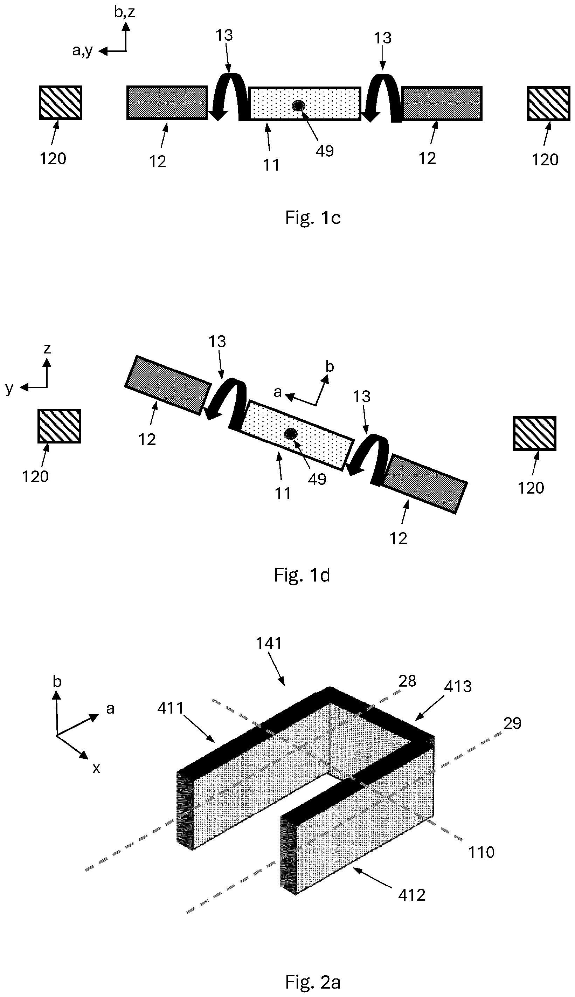

Figure 1c shows the device in its rest position, where all parts lie in the xy-plane. In the rest position the a-axis coincides with the y-axis, and the xa-plane is still the same plane as the xy-plane. But when the support structure 12 undergoes rotation about the second rotation axis 49, as figure 1d illustrates, the a-axis is shifted away from the xy-plane. The xa-plane then no longer coincides with the xy-plane, and the b-axis is no longer parallel to the z-axis. Just as before, the reflector 11 may still rotate out of the xa-plane in figure 1d, about the first rotation axis 19 which is parallel to the a-axis.

The second suspension structure may be configured to prevent the support structure 12 from rotating about the first rotation axis 19. It may also be configured to prevent the support structure 12 from rotating about any axis parallel to the y-axis or to the a-axis.

The device shown in figure 1a comprises a first stiffening spring 141 on a first side (left side) of the first rotation axis 19. It also comprises a second stiffening spring 142 on a second side (right side) of the first rotation axis 19. The stiffening springs 141 and 142 are here illustrated which symbols which show that they must be flexible in the direction which is perpendicular to the ax-plane. This direction is illustrated as the b-axis in the figures of this disclosure. In other words, the stiffening springs 141 and 142 should exhibit out-of-plane flexibility. Without such flexibility, the reflector 11 would not be able to rotate about the first rotation axis 19.

On the other hand, in order to reduce the deformation of the mirror, stiffening springs 141 and 142 must counteract the bending of the reflector. The stiffening springs should therefore not be too flexible in the out-of-plane direction.

Furthermore, the stiffening springs 141 and 142 should also exhibit some flexibility in the x-direction which is perpendicular to the first rotation axis 19. In figure 1a, the stiffening springs are attached to the edges 118 of the reflector 11. When the reflector rotates about the first rotation axis 19, the x-coordinates of these edges 118 will change. The stiffening springs 141 and 142 should accommodate this change.

The optimal design of the stiffening springs 141 and 142 will depend on the diameter and thickness of the reflector 11 and on the desired oscillation frequency and amplitude. Ideally, the stiffening springs should be flexible enough in both the out-of-plane direction and the x-direction to allow the reflector 11 to reach the desired frequency and amplitude. On the other hand, there needs to be some stiffness in the out-of-plane direction to reduce the deformation of the reflector as it oscillates. In practice, (1) the reflector, (2) the first suspension structure and (3) the stiffening springs will resonate together as a moving system. Computer simulations may be performed to determine the optimal 1+2+3 configuration for reaching a particular target frequency and amplitude.

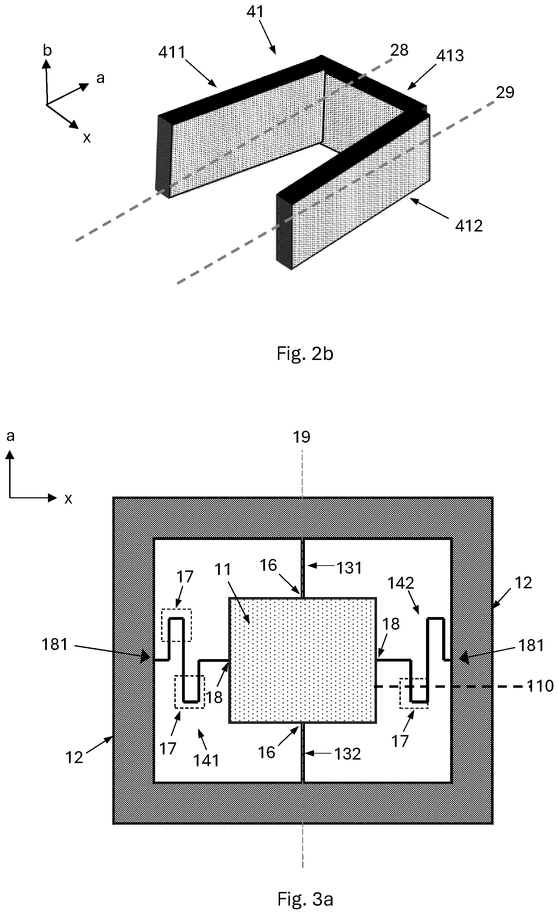

The stiffening springs may be implemented as folded springs. Figure 2a illustrates a part of a stiffening spring 41 with a fold in the xab-space. In this case, the fold comprises a connecting part 413 which joins the ends of two twistable parts 411 and 412 to each other. The twistable parts 411 and 412 are in this case parallel to the ab-plane, while the connecting part 413 is parallel to the xb-plane. All these parts of the fold may be orthogonal to the ax-plane when the spring is in its rest position, as figure 2 illustrates. The length (a-axis) to thickness (x-axis) aspect ratio of the twistable parts 411 and 412 of the stiffening spring 41 may for example be greater than 5 or greater than 10.

When the reflector 11 rotates about the first rotation axis 19, the fold can accommodate the out-of-plane movement through twisting in the twistable parts 411 and 412. The first twistable part 411 twists about a first longitudinal axis 28 and the second twistable part 412 twists about a second longitudinal axis 29. The longitudinal axes 28 and 29 may, but do not necessarily have to, be parallel to the a-axis.

If the second twistable part 412 (for example) is closer to the reflector than the first twistable part 411, then the second twistable part 412 may absorb most of the torque. Due to the twisting of the second twistable part 412, the torque which acts on the first twistable part 411 will be relatively small. Assuming that the first and second twistable parts 411 and 412 have the same dimensions, the first twistable parts 411 will then twist less than the second twistable part 412. The spring 41 as a whole will turn in the out-of-plane direction. The fold can also accommodate movement in the x-direction by opening up wider in the ax-plane, as figure 2b illustrates.

The fold does not necessarily have to perpendicular as in figures 2a-2b. Many other fold geometries are also possible, as explained below. In any embodiment presented in this disclosure, the spring 14 makes a turn in the support plane at the fold. In any embodiment presented in this disclosure, the tangent of the of the stiffening spring in the support plane may change direction by more than 100 degrees, more than 120 degrees or more than 150 degrees at the fold. In any embodiment presented in this disclosure, a line 110, illustrated in example 2a, drawn outward from the reflector in the support plane crosses the stiffening spring 14 twice when it crosses the fold. The line 110 may be perpendicular to the edge of the reflector in the support plane. The fold may also be called a folded section of the stiffening spring 14.

In any embodiment described in this disclosure, the oscillation frequency of the reflector as it rotates about the first rotation axis 19 may lie between 1 kHz and 100 kHz. The diameter of the reflector can be between 1-5 millimeters, and it may be between 10 and 100 micrometers thick.

In any embodiment presented in this disclosure, the reflector 11 may have a rectangular shape in the ax-plane. Alternatively, the reflector may have a circular shape in the ax-plane. The shape can be freely selected, and many other shapes are also possible.

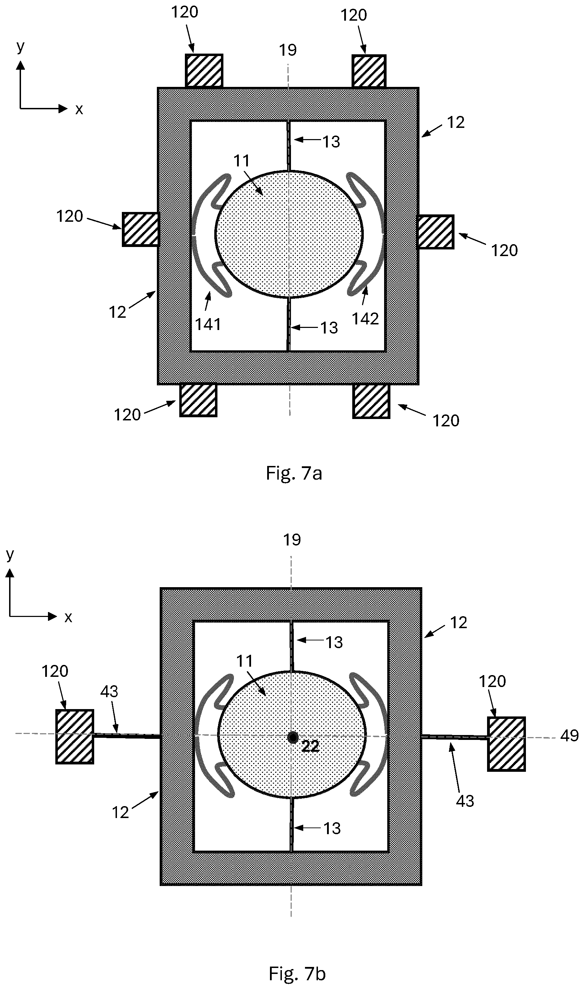

The direction of the first rotation axis 19 is determined by the orientation of the support structure 12 and by the placement of the first suspension structure 13 within the support structure 12. The support structure 12 is prevented from rotating about the first rotation axis 19. This is achieved in figure 1b by fixing the support structure 12 rigidly to the fixed structures 120. In figures 1c and 1d the second suspension structure (not illustrated in these figures but illustrated in figure 7b below) is stiff in the out-of-plane direction (the direction of the b-axis). This prevents the rotation of the support structure 12 about the first rotation axis 19.

### Stiffening spring geometries

Figures 3a - 3f illustrate MEMS mirror devices with differently designed stiffening springs. In all of these examples, and in all embodiments presented in this disclosure, the first suspension structure 13 comprises a first torsionally flexible spring 131 and a second torsionally flexible spring 132 which extend from the support structure 12 to first attachment points 16 on the reflector 11. The first torsionally flexible spring 131 and second torsionally flexible spring 132 are on opposite sides of the reflector 11.

One or more first stiffening spring 141 extend from the support structure 12 to a second attachment point 18 on the reflector 11 on the left side of the first rotation axis 19. One or more second stiffening springs 142 extend from the support structure 12 to a second attachment point 18 on the reflector 11 on the right side of the first rotation axis 19. The stiffening springs allow the reflector 11 to oscillate about the first rotation axis but reduce the deformation that this oscillation produces at the edges of the reflector.

More precisely, the MEMS mirror device comprises a stiffening structure with one or more first stiffening springs 141 and one or more second stiffening springs 142 which extend from the support structure to second attachment points 18 on the reflector. All of the one or more first stiffening springs 141 are on a first side of the first rotation axis 19. All of the one or more second stiffening springs 142 are on a second side of the first rotation axis 19. The first side of the first rotation axis is opposite to the second side.

Each stiffening spring comprises at least one fold 17. Figures 3a - 3b illustrate lines 110 which extend outward from the reflector and cross the stiffening spring twice as they cross the folded section.

In any embodiment presented in this disclosure, each of the first and second stiffening springs 141 and 142 may comprise one fold, two folds or more than two folds.

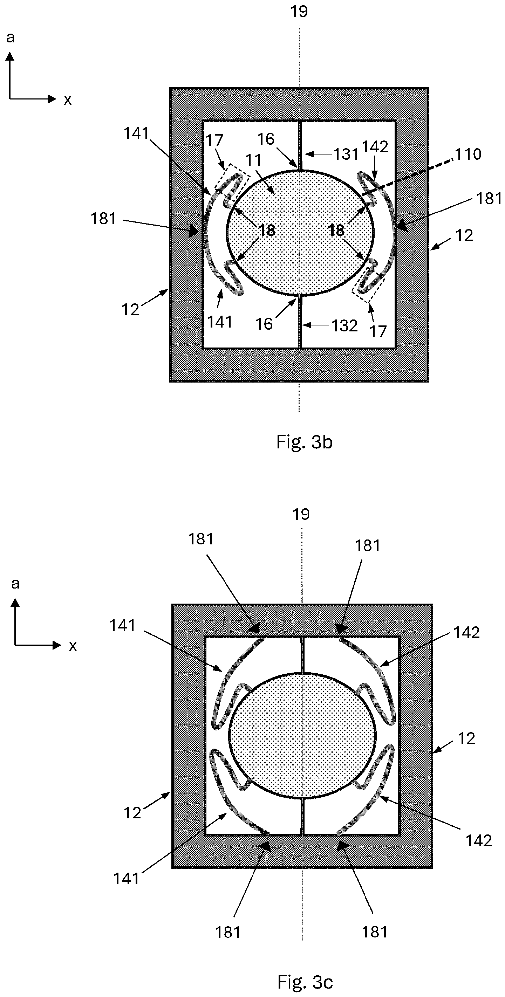

Each of the first and second stiffening springs 141 and 142 may have a meandering shape, as figures 3a and 3b illustrate. In other words, each stiffening spring may be a folded beam with a serpentine shape.

Figure 3a illustrates first and second stiffening springs 141 and 142 where the folds 17 have a rectangular shape. The folds 17 are connected in series (i.e. they are concatenated), and the twistable parts extend from one fold to the next, or from a fold to the reflector 11 or support structure 12. The rectangular folds 17 are in figure 3a aligned with the x-and a-axis, but this is not a necessary requirement. The stiffening springs 141 and 142 illustrated in figure 3a can be oriented in any direction in the xa-plane.

Figure 3b illustrates first and second stiffening springs 141 and 142 where the folds 17 have a curved shape. There is only one fold 17 in the illustrated stiffening springs, and the curvature of the twistable parts allows the stiffening spring to follow the circular shape of the reflector 11. The first and second stiffening springs could alternatively have a meandering and curved shape with multiple folds connected in series. This has not been illustrated.

In any geometry where the stiffening springs are curved, all parts of the stiffening springs 141 and 142 may be substantially parallel to the edge of the reflector 11, as figure 3b illustrates. The stiffening springs 141 and 142 illustrated figure 3b can be oriented in any direction in the xa-plane.

Furthermore, in any embodiment presented in this disclosure, with any stiffening spring geometry, the third attachment points 181 may lie anywhere along the inside of the support structure 12. In figure 3b, the third attachment points lie on an axis which is parallel to the x-axis and crosses the center of the reflector 11. Figure 3c illustrates a geometry where the springs are oriented in the opposite direction and the third attachment points 181 are close to the first rotation axis 19. The third attachment points may even lie on the first rotation axis 19.

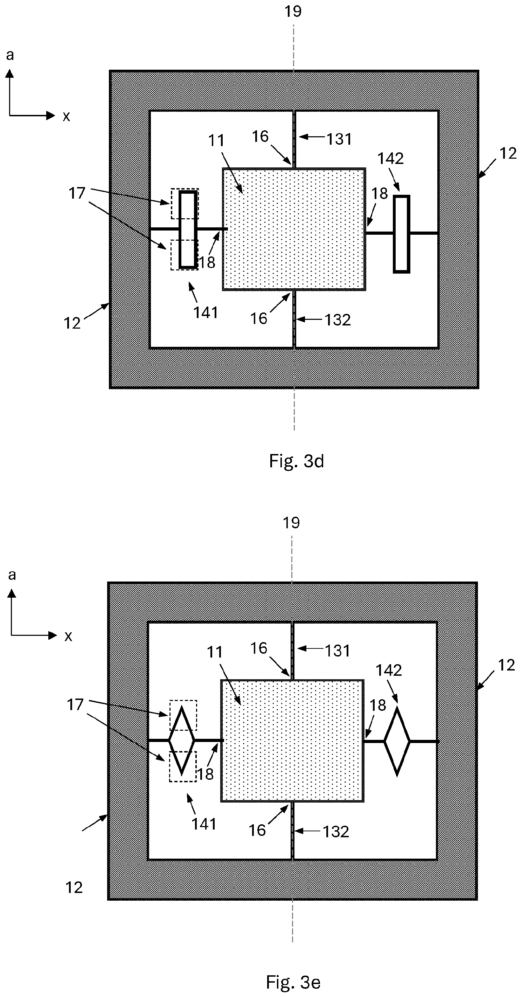

Two folds 17 may also be connected in parallel. This is illustrated in figure 3d where the first and second stiffening springs 141 and 142 are box springs. The twistable parts of each stiffening spring 141 and 142 extend between the folds. Multiple boxes may be connected in series on a single stiffening spring. The rectangular folds 17, and the sides of the box spring, are in figure 3d aligned with the x-and a-axis, but this is not a necessary requirement. The stiffening springs 141 and 142 illustrated in figure 3d can be oriented in any direction in the xa-plane. Furthermore, the stiffening springs 141 and 142 may also comprise box springs with other shapes. A diamond-shaped box spring is illustrated in figure 3e.

In any embodiment presented in this disclosure, all first and second stiffening springs 141 and 142 may have the same geometry in the support plane. Additionally, the first stiffening springs 141 may be reflection-symmetric with the second stiffening springs 142 in relation to the first rotation axis 19. In embodiments where there are two first stiffening springs 141 and two second stiffening springs 142, the two first stiffening springs 141 may be reflection-symmetric with each other in relation to an axis which is parallel to the x-axis and crosses the center of the reflector 11 (such as second rotation axis 49 in figure 7b) and the two second stiffening springs 142 may be reflection-symmetric with each other in relation to the same axis.

Stiffening springs with different geometries may also be implemented in the same device. The first and second stiffening springs may therefore have different shapes.

### Stiffening spring properties

One of end of each first and second stiffening spring 141 and 142 is attached to the reflector 11 at a second attachment point 18. The opposite end of each first and second stiffening spring 141 and 142 may be attached to the support structure 12 at a third attachment point 181.

In any embodiment presented in this disclosure where two first/second stiffening springs are used, the two first/second stiffening springs may be connected to the same third attachment point 181 but to different second attachment points 18, as figure 3b illustrates. Alternatively, two first stiffening springs 141 may be connected to the same second attachment point 18, but to different third attachment points 181 (this option has not been illustrated). Another alternative is that two first stiffening springs 141 may be connected to different second attachment points 18 and also to different third attachment points 181 (this option is illustrated for example in figure 3c). The same options apply to the second stiffening springs 142.

As mentioned above, each of the one or more first and second stiffening springs may be attached to an edge of the reflector at a second attachment point 18. The fold 17 in the support plane may be substantially parallel to the tangent of the edge of the reflector 11 at said attachment point 18. In other words, at least the twistable part 412 (illustrated in figure 2a) which is closest to the reflector 11 may be substantially parallel to the tangent. The other twistable part 411 in the same stiffening spring may also be substantially parallel to the tangent, or it may be oriented in a slightly different angle in relation to the tangent.

The turns which form the fold 17 in the first and second stiffening springs 141 and 142 may be right angle turns in the support plane, as figures 3a and 3d illustrate. However, the stiffening springs and the fold may alternatively comprise curved twistable parts, as figures 3b and 3c illustrate. Many different shapes are possible.

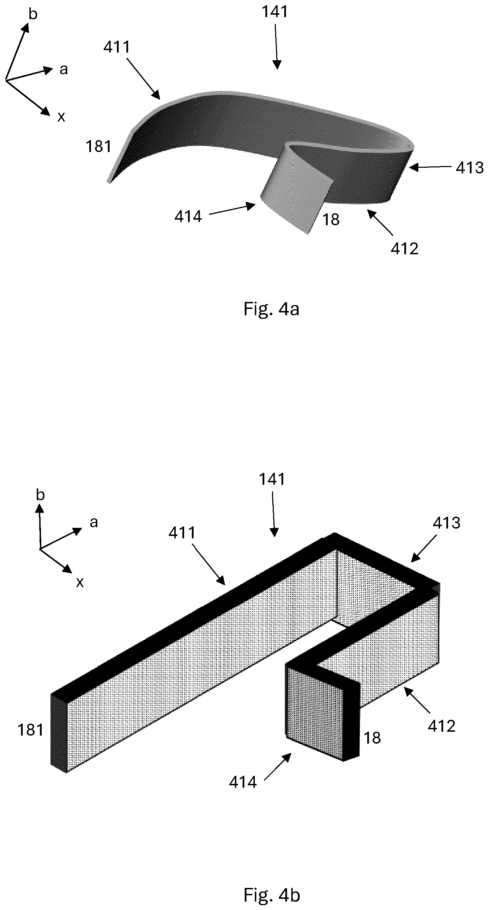

Figure 4a illustrates in more detail the shape of the stiffening springs 141 and 142 in figure 3b. In this case, the stiffening spring 141 comprises a connecting part 413 which joins a first twistable part 411 to a second twistable part 412. In other words, the connecting part 413 extends from the first twistable part 411 to the second twistable part 412. All parts have some curvature, and the curvature of the connecting part 413 is greater than the curvatures of the first and second twistable parts 411 and 412.

The stiffening spring 141 in figure 4a also comprises a first end which is attached to the third attachment point and a second end which is attached to the second attachment point 18. The stiffening spring in figure 4a has an optional end part 414 which extends from the second twistable part 412 to the reflector 11. The end part 414 may be substantially orthogonal to the edge of the reflector 11 at the second attachment point 18.

Figure 4b illustrates a similar design where the first and second twistable parts 411 and 412, the connecting part 413 and optional end part 414 are straight in the support plane and oriented at right angles in relation to each other. The fold therefore has a rectangular shape. The same design can also be implemented with other options, for example combinations of straight and curved parts.

In both figures 4a and 4b, and in other corresponding designs where the stiffening springs comprises a single fold, the length of the first twistable part 411 in the support plane may for example be more than 1.2 times, more than 1.5 times or more than 2 times the length of the second twistable part 412 in the support plane. This gives the first twistable part 411 more torsional flexibility than the second twistable part 412. However, these lengths may alternative be substantially equal, or the length of the second twistable part 412 may be greater than the length of the first twistable part.

In general, in any embodiment presented in this disclosure, the rotation axis may define an a-axis. Each first and second stiffening spring may span across a span distance from a minimum a-coordinate to a maximum a-coordinate in the direction of the a-axis. The sum of the span distances of all first stiffening springs may be greater than the effective radius of the reflector, and the sum of the span distances of all second stiffening springs may be greater than the effective radius of the reflector.

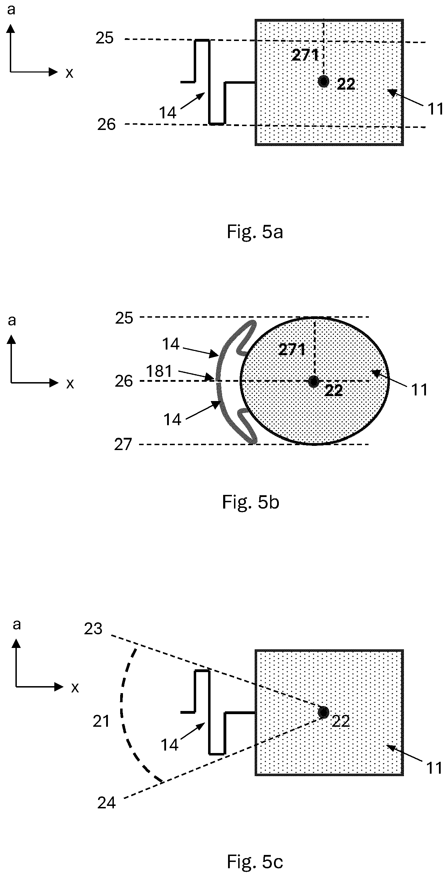

This is illustrated in figures 5a and 5b. Figure 5a shows a square-shaped reflector 11 with a center point 22, where the effective radius 271 may be half of the length of the side of the square. Figure 5b shows a circular reflector 11, where the effective radius 271 is the radius of the circle. In other reflector geometries, the effective radius may for example be the average distance of the reflector edge from the center of the reflector.

The spring 14 in figures 5a - 5b is a stiffening spring. The distal ends of the stiffening spring 14 in the a-direction are marked with lines 25 and 26 which are perpendicular to the a-axis. The distance in the a-direction from line 15 to line 26 is the span distance of the stiffening spring 14. Figure 5a shows only a single stiffening spring 14. As figure 5a illustrates, the span distance of the stiffening spring 14 may be greater than the effective radius of the reflector 11.

Figure 5b shows two stiffening springs 14 which meet each other at the third attachment point 181. The lines 25-27 extend to the distal ends (that is, two the ends that are furthest apart in the a-direction) of the springs. Here the span distance of the upper spring is the distance in the a-direction between lines 25 and 26, while the span distance of the lower spring is the distance in the a-direction between lines 26 and 27. As figure 5b illustrates, the sum of these two span distances may be greater than the effective radius of the reflector.

Additionally or alternatively, in any embodiment presented in this disclosure, each first and second stiffening spring may span across a span angle viewed from the center point of reflector. The sum of the span angles of all first stiffening springs may be greater than 90 degrees, and the sum of the span angles of all second stiffening springs may be greater than 90 degrees.

This is illustrated in figure 5c, where the lines 23 and 24 extend from the center point 22 of the reflector 11 to the opposing distal ends of the stiffening spring 14. The word distal here refers to the fact that the lines extend to the two most distant ends of the spring as observed from the center point 22. In other words, the distal ends lie at the two folds. The span angle 21 is the angle between the lines 23 and 24. In figure 5c, since there is only one stiffening spring 14, there is only one span angle on this side of the reflector.

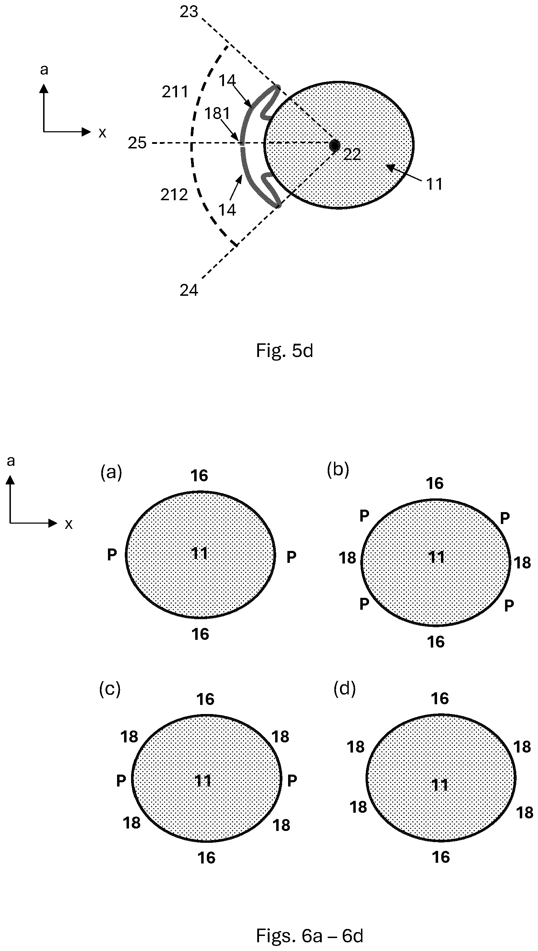

Figure 5d illustrates an alternative where there are two stiffening springs 14 on the same side of the reflector 11. The lines 23, 24 and 25 extend to the distal ends of the two springs.

Here one distal end lies at the third attachment point 181, while the other lies at the fold In this case the span angle 211 of the upper spring is the angle between lines 23 and 25, and the span angle 212 of the lower spring is the angle between lines 24 and 25. As mentioned above, the sum of the angles 211 and 212 may be greater than 90 degrees.

### The first and second fixing points

Figure 6 illustrates various possibilities relating to the placement of the first attachment points 16 (where the first suspension structure is attached) and the second attachment points 18 (where the stiffening springs are attached). These options apply in any embodiment presented in this disclosure. The letter P illustrates the point where reflector deformation is greatest.

Figure 6a illustrates a reflector without stiffening springs. The deformation will in this case be greatest at the points P of the reflector which are furthest away from the first rotation axis.

As figure 6b illustrates, at least one second attachment point 18 may be placed on an axis which is parallel to the x-axis and passes through the center of the reflector. This placement may (but does not necessarily have to) be used if the MEMS mirror device comprises only one first stiffening spring and only one second stiffening spring.

Any stiffening springs will reduce deformation but not completely eliminate it. The maximum deformation will therefore be significantly smaller in figure 6b than in figure 6a. Nevertheless, the deformation is still in figure 6b greater in some parts of the reflector than in other parts. Due to the deformation-reducing action of the stiffening springs, the points P are in figure 6b shifted to a different location on the edge of the reflector. The suspension structure 13 may be significantly more rigid in the b-direction (perpendicular to the ax-plane) than the first and second stiffening springs. The points P may therefore lie slightly closer to the second attachment points 18 than to the first attachment points 16 in figure 6b.

Figure 6c - 6d illustrates a solution where two first stiffening springs and two second stiffening springs are used. In other words, there are two second attachment points 18 on each side of the first rotation axis. The optimal placement will depend on the properties of the stiffening springs. The second attachment points 18 may be placed so that the distances between each attachment point (first or second) and the adjacent attachment point (first or second) along the edge of the reflector are equal, as figure 6c illustrates (this is also true in figure 6a). The deformation will be smaller than in figure 6b, but the points of maximal deformation may again shift back to the same position as in figure 6a, since those positions lie halfway between two stiffening springs.

Alternatively, as figure 6d illustrates, the second attachment points 18 may be placed so that the distance between each second attachment point 18 and the adjacent second attachment point along the edge of the reflector is less than the distance between the same said attachment point 18 and the adjacent first attachment point 16. In this case, the location of the point P of maximum deflection on the reflector will depend on the properties of the stiffening springs.

The MEMS mirror device may comprise more than two first stiffening springs and more than two second stiffening springs. In that case, there may be a corresponding number of second attachment points 18 on the first and second sides of the first rotation axis. This option has not been illustrated. However, even though increasing the number of stiffening springs further reduces the deformation of the reflector, it also inhibits the oscillation of the reflector and may limit the oscillation frequency and amplitude too much. This trade-off should be considered when stiffening spring arrangements are designed and implemented.

Any fixing point arrangement described above may be combined with any stiffening spring geometry described earlier, and the stiffening spring may have any property described earlier.

### Single-axis embodiment

As mentioned above with reference to figure 1b, the MEMS mirror device may comprise a fixed structure 120. The support structure 12 may be a part of the fixed structure 120 so that the support structure 12 does not move in relation to the fixed structure 120 when the device is in operation.

Figure 7a illustrates this device in the xy-plane, which in this embodiment coincides with the xa-plane for the reasons explained above. The fixed structure 120 is illustrated as a set of anchor points. The support structure 12 is firmly attached to the fixed structure 120, or a part of the fixed structure 120. The support structure 12 therefore undergoes no movement, or very little movement, when the reflector 11 oscillates about the first rotation axis 19.

### Two-axis embodiment

As mentioned above with reference to figures 1c - 1d, the device may comprise a fixed structure 120 and a second suspension structure. The support structure 12 may be suspended from the fixed structure 120 by the second suspension structure. The second suspension structure may allow the support structure 12 to rotate about a second rotation axis in relation to the fixed structure 120.

Figure 7b illustrates this device in the xy-plane, which in this embodiment coincides with the xa-plane only when the device is in its rest position. The fixed structure 120 is illustrated as two anchor points which lie on a second rotation axis 49. The support structure 12 is attached to the fixed structure 120 with a second suspension structure 43. The second suspension structure 43 comprises two torsionally flexible springs which lie on the second rotation axis on opposite sides of the support structure 12. Any torsionally flexible spring described in this disclosure may for example be a torsion bar, as figure 7b illustrates. More complex torsionally flexible structures can also be used.

The first rotation axis 19 may be perpendicular to the second rotation axis 49. Both the first and second rotation axes may cross the center point 22 of the reflector 11, as figure 7b illustrates.

### Actuators

The MEMS mirror device may comprise one or more force transducers which are configured to rotate the reflector 11 about the first rotation axis 19. The MEMS mirror device may also comprise one or more force transducers which are used to detect the detect the oscillation of the reflector 11 about the first rotation axis 19. The same force transducers may be used for both purposes. Alternatively, the MEMS mirror device may comprise one or more driving force transducers for the former purpose and one or more sensing force transducers for the latter purpose.

In any embodiment described in this disclosure, the one or more force transducers may be piezoelectric transducers. In this case the device may comprise one or more transducer beams which extend from the support structure to corresponding one or more transducer attachment points on the reflector. The device may also comprise a piezoelectric force transducer on each of the one or more transducer beams.

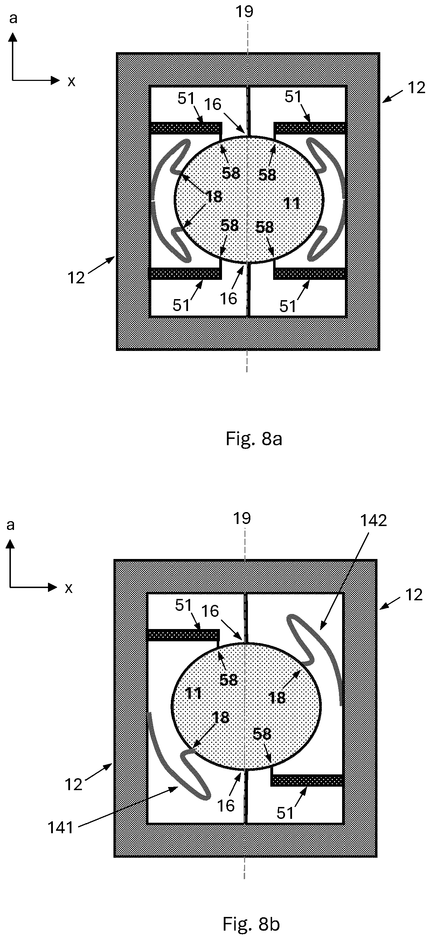

This is illustrated in figure 8a, where four transducer beams 51 extend from the support structure 12 to the reflector 11. Each beam is attached to a transducer attachment point 58 on the reflector 11. The transducer beams 51 may be arranged so that the beams 51 on one side (for example the left side in figure 8a) of the first rotation axis 19 are reflection-symmetric with the beams 51 on the other (right) side in relation to the first rotation axis 19. Figure 8a illustrates transducer beams 51 which have an elongated shape and extend from the support structure 12 to the reflector 11 in the x-direction. The transducer beams could alternatively extend in the a-direction or in a diagonal direction which lies between the a- and x-directions (these options have not been illustrated).

Each piezoelectric force transducer may comprise a layer of piezoelectric material which is deposited onto the transducer beam 51. The transducer may also comprise a bottom electrode layer below the layer of piezoelectric material and a top electrode layer on top of the layer of piezoelectric material. These two electrode layers may be deposited onto the transducer beam 51 before and after the layer of piezoelectric material, so that the piezoelectric layer is sandwiched between the electrode layers.

The transducer beam 51 may bend out of the ax-plane when a drive voltage is applied to the electrodes. The transducer beams 51 may oscillate back and forth when the drive voltage signal is an AC signal, driving the two sides of the reflector 11 (left and right) up and down and thereby rotating the reflector 11 about the first rotation axis 19. Alternatively or additionally, if the transducers are used to sense the oscillation the mirror, the moving mirror bends the transducer beams 51, and this back-and-forth bending can be detected as a sense voltage signal measured from the electrodes.

Each transducer attachment point 58 may lie between a first attachment point 16 and a second attachment point 18. In other words, each transducer beam 51 may be attached to the edge of the reflector 11 between a first attachment point 16 where the first suspension structure is attached to the reflector 11 and a second attachment point 18 where the closest stiffening spring is attached to the reflector 11.

Referring to the preceding discussion on figures 6a - 6d, we note that the transducer attachment points 58 are points where the reflector 11 is not deformed. This is because the transducer locks the edge of the reflector beam precisely to the desired position at the transducer attachment point 58. If no stiffening springs would be present in figure 8a, then deformation of the reflector 11 would be maximal at the points on the edge of the reflector 11 which are furthest away (measured along the edge) from the nearest first attachment point 16 or transducer attachment point 58.

Figure 8b illustrates an alternative configuration with two transducer beams 51, one in the top left quadrant of the space within support structure 12 and one in the bottom right quadrant. The configuration also comprises one first stiffening spring 141 in the bottom left quadrant and one second stiffening spring 142 in the top right quadrant. The stiffening springs could have any geometry described in this disclosure. It is also possible to implement two transducer beams, two first stiffening springs and two second stiffening springs around the reflector. This option has not been illustrated.

In any embodiment described in this disclosure, the one or more force transducers may alternatively be capacitive transducers. The device may comprise one or more first capacitive structures on the reflector, paired with one or more second capacitive structures on the support structure. The first and second capacitive structures form a capacitive force transducer.

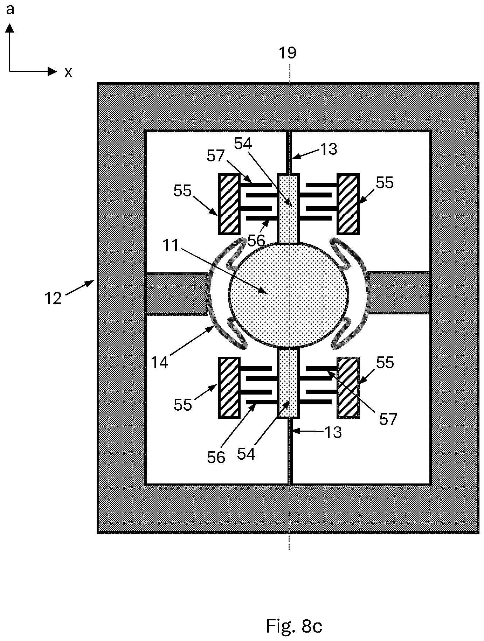

The first and second capacitive structures may for example be elongated fingers. This is illustrated in figure 8c. The reflector 11 comprises two extensions 54 which extend in opposite directions from the (in this case circular) center part of the reflector along the first rotation axis 19. When the device is used, these extensions 54 rotate about the first rotation axis 19 as a part of the reflector 11. The first attachment points are at the ends of the extensions, as figure 8c illustrates.

The reflector 11 also comprises a set of first capacitive structures 56 on the extensions 54. The device in figure 8c also comprises second capacitive structures 57 which may be attached to fixed supports 55. The first and second capacitive structures 56 and 57 may be finger-shaped structures which extend in the x-direction from the fixed supports 55. The first and second capacitive structure 56 and 57 may be interdigitated with each other. The first or the second capacitive structure 56 or 57 may be recessed in the b-direction from one side of the device layer. This allows an out-of-plane force to be generated between the first and second capacitive structures when a drive voltage signal is applied between them. Alternatively, it allows a sense voltage signal to be measured when the reflector 11 is tilted away from its rest position.

In the single-axis embodiment, the fixed supports 55 in figure 8c may be anchor points which are a part of the fixed structure 120. In the two-axis embodiment, the fixed supports 55 may be a part of the support structure 12.

## Claims

1. A MEMS mirror device comprising:
- a reflector,
- a support structure and a first suspension structure, wherein the support structure defines a support plane, wherein the first suspension structure extends from the support structure to the reflector and allows the reflector to rotate about a first rotation axis out of the support plane,
- one or more first stiffening springs which extend from the support structure to the reflector on a first side of the first rotation axis, and one or more second stiffening springs which extend from the support structure to the reflector on a second side of the first rotation axis, wherein the second side of the first rotation axis is opposite to the first,
**characterized in that** each of the one or more first and second stiffening springs comprises one or more folds in the support plane.

2. A MEMS mirror device according to claim 1, wherein each of the one or more first and second stiffening springs is attached to an edge of the reflector at an attachment point, and the fold in the support plane is substantially parallel to the tangent of the edge of the reflector at said attachment point.

3. A MEMS mirror device according to any preceding claim, wherein
- the rotation axis defines an a-axis
- each first and second stiffening spring spans across a span distance from a minimum a-coordinate to a maximum a-coordinate in the direction of the a-axis,
- the sum of the span distances of all first stiffening springs is greater than the effective radius of the reflector, and the sum of the span distances of all second stiffening springs is greater than the effective radius of the reflector.

4. A MEMS mirror device according to any preceding claim, wherein
- each first and second stiffening spring spans across a span angle viewed from the center point of reflector, and the sum of the span angles of all first stiffening springs is greater than 90 degrees, and the sum of the span angles of all second stiffening springs is greater than 90 degrees.

5. A MEMS mirror device according to any preceding claim, wherein the device also comprises a fixed structure, and the support structure is a part of the fixed structure so that the support structure does not move in relation to the fixed structure when the device is in operation.

6. A MEMS mirror device according to any of claims 1 - 4, wherein the device also comprises a fixed structure and a second suspension structure, and the support structure is suspended from the fixed structure by the second suspension structure, and second suspension structure allows the support structure to rotate about a second rotation axis in relation to the fixed structure.

7. A MEMS mirror device according to claim 6, wherein the first rotation axis is perpendicular to the second rotation axis.

8. A MEMS mirror device according to any preceding claim, wherein the device also comprises one or more force transducers which are configured to rotate the reflector about the first rotation axis.

9. A MEMS mirror device according to claim 8, wherein the device comprises:
- one or more transducer beams which extend from the support structure to corresponding one or more transducer attachment points on the reflector,
- a piezoelectric force transducer on each of the one or more transducer beams.

10. A MEMS mirror device according to claim 9, wherein each transducer attachment point lies between a first attachment point and a second attachment point.

11. A MEMS mirror device according to claim 8, wherein the device comprises
- one or more first capacitive structures on the reflector, paired with one or more second capacitive structures on the support structure, wherein the first and second capacitive structures form a capacitive force transducer.
